# EUROPÄISCHE PATENTSCHRIFT

(11) **EP 2 055 201 B1**
(45) Veröffentlichungstag und Bekanntmachung des Hinweises auf die Patenterteilung: **25.01.2012**
(21) Anmeldenummer: 08019176.0
(22) Anmeldetag: 03.11.2008
(51) Int. Cl.: A23N 15/02

(54) **Abbeermaschine**
Berry removal machine
Egrappoir

(30) Priorität: 02.11.2007 DE 202007015192 U
(43) Veröffentlichungstag der Anmeldung: 06.05.2009
(73) Patentinhaber: Armbruster, Hermann, 74363 Güglingen (DE)
(72) Erfinder: Armbruster, Hermann, 74363 Güglingen (DE)
(74) Vertreter: Lempert, Jost

(56) Entgegenhaltungen:
- WO-A-2005/041696
- DE-C1- 4 127 761
- DE-U1- 20 310 936
- DE-U1-202006 004 631
- FR-A- 526 921
- FR-A- 2 862 493

## Beschreibung

Die Erfindung betrifft eine Abbeermaschine mit mindestens einer Stacheln aufweisenden, um ihre Achse in einem Abbeerzylinder drehbaren Abbeerwalze.

Bei derartigen Abbeermaschinen durchsetzt in der Regel eine mit schraubenförmig angeordneten, sich radial erstreckenden Stacheln versehene Abbeerwalze einen gelochten Abbeerzylinder. Die Abbeerwalze ist angetrieben; der gelochte Abbeerzylinder kann gegensinnig oder gleichsinnig angetrieben sein. Um ein effektives Abbeeren der Traubenbeeren von den Traubenrappen zu erreichen, sind hohe Umdrehungszahlen, insbesondere der Abbeerwalze, erforderlich. Hierdurch erfolgt ein ungenaues Trennen von Beeren und Abbeerwalze; oft bleiben Fruchtfleischbereiche an den Rappen hängen und werden mit diesen aus dem Abbeerzylinder herausbefördert und können daher nicht zur Herstellung des Traubenmostes und aus diesem des Weines genutzt werden. Der Abfall ist damit sehr hoch. Außerdem wird aufgrund der hohen Geschwindigkeiten das Traubengut geschädigt.

Die DE 213 10 936 U1 zeigt eine Abbeermaschine mit mindestens einer Stacheln aufweisenden, um ihre Achse in einem Abbeerzylinder drehbaren Abbeerwalze, bei der der Abbeerwalze zusätzlich zu ihrer Drehbewegung eine weitere periodische Bewegung aufgeprägt wird. Dies geschieht durch einen Drehantrieb, beispielsweise über einen Exzenter. Auch ist es bekannt, einen Vibrationsantrieb vorzusehen.

Die bekannte Maschine arbeitet zwar zufriedenstellend, dennoch liegt der Erfindung die Aufgabe zugrunde, eine schonende, dennoch effektive Trennung des Traubenguts von den Traubenrappen ohne übermäßige schädigende Belastung des Drehantriebs zu bewirken.

Zur Lösung der genannten Aufgabe sieht die Erfindung bei einer gattungsgemäßen Abbeermaschine zwischen Abtriebswelle eines die Abbeerwalze antreibenden Drehantriebs und Antriebswelle der Abbeerwalze eine elastisch-dämpfende Abnahmeverbindung vor.

Durch die erfindungsgemäße Lösung wird verhindert, dass nachteilige Rückwirkungen der Abbeerwalze, insbesondere, wenn diese Vibrationen ausgesetzt ist, auf den Drehantrieb einwirken und diesen, Lager desselben oder dergleichen beschädigen.

In bevorzugter Ausgestaltung ist dabei vorgesehen, dass zwischen Abtriebswelle und des Drehantriebs und Antriebswelle der Abbeerwalze radial und/oder im Wesentlichen tangential gerichtete elastisch-dämpfende Glieder vorgesehen sind, wobei insbesondere die elastisch-dämpfenden Glieder Gummipuffer sind.

Eine Weiterbildung der erfindungsgemäßen Abbeermaschine sieht einen Vibrationsantrieb für die Abbeerwalze vor.

Durch den Vibrationsantrieb kann den üblichen Drehbewegungen einer Abbeermaschine eine Zusatzbewegung mit wesentlich höherer Frequenz aufgeprägt werden, wodurch eine wirksame Trennung des Traubenguts von den Traubenrappen bei reduzierten Geschwindigkeiten, insbesondere reduzierter Relativgeschwindigkeit der Drehbewegung von Abbeerwalze und Abbeerzylinder in schonender Weise erreicht wird. Eine bevorzugte Ausgestaltung zeichnet sich dabei durch mindestens einen Vibrationsantrieb für die Abbeerwalze aus, der vorteilhafterweise derselben eine Relativbewegung zum Abbeerzylinder aufprägt. Der Abbeerzylinder wird also durch den Vibrationsantrieb nicht mit in Vibrationsbewegungen versetzt.

Um die Vibrationsbewegungen effektiv aufprägen und einsetzen zu können, ohne dass Verschleiß auftritt, sehen Weiterbildungen vor, dass die Abbeerwalze elastisch und/oder dämpfend gelagert ist, wobei insbesondere Gummipuffer zur Lagerung der Abbeerwalze vorgesehen sind.

In bevorzugter Ausgestaltung ist dabei vorgesehen, dass der Vibrationsantrieb an dem dem Drehantrieb abgewandten Ende der Abbeerwalze angeordnet ist, wobei insbesondere der Vibrationsantrieb über den elastisch-dämpfenden Gliedern, insbesondere Puffern, entsprechende elastisch-dämpfende Glieder seine Vibrationsschwingungen überträgt.

Weitere Vorteile und Merkmale der Erfindung ergeben sich aus der Beschreibung und aus der nachfolgenden Zeichnung, in der ein Ausführungsbeispiel der Erfindung unter Bezugnahme auf die Zeichnung im einzelnen erläutert ist. Dabei zeigt:

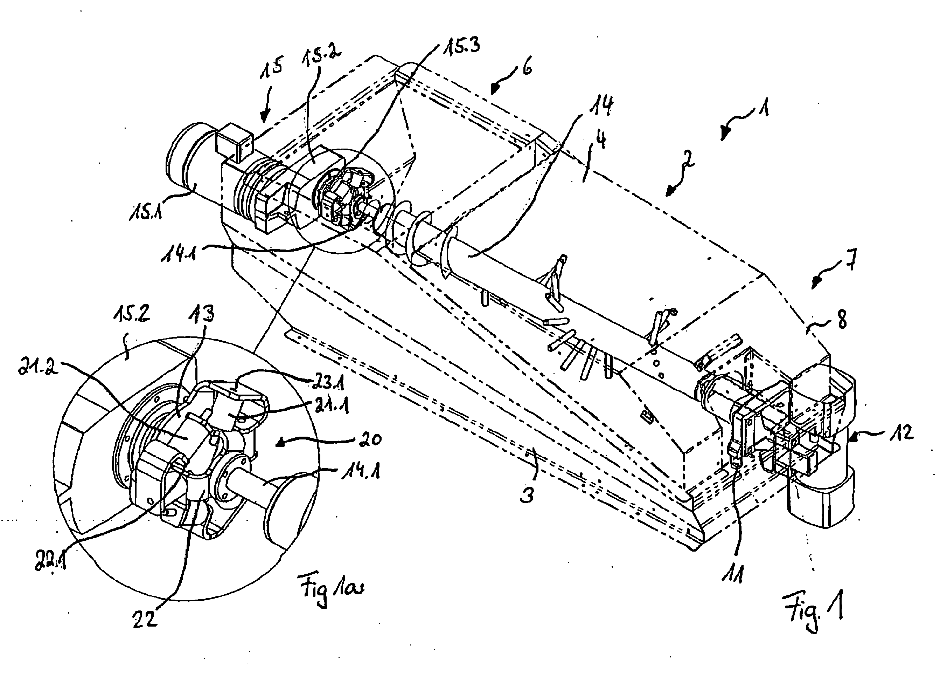

- Fig. 1: eine erfindungsgemäße Abbeermaschine in perspektivischer Darstellung; und
- Fig. 1a: eine Detaildarstellung der Verbindung zwischen Drehantrieb und Walze;

Die erfindungsgemäße Abbeermaschine 1 weist einen Grundrahmen 2 auf, mit dem die Abbeermaschine 1 oberhalb einer Auffangwanne mit Quetschwalzen sowie eine Einrichtung zum Entfernen der Traubenrappen, wie einer Rutsche, angeordnet wird. Die letztgenannten Teile sind in den Zeichnungen nicht dargestellt. Diesbezüglich wird beispielhaft auf die DE- 203 10 936 U verwiesen.

Mit dem Grundrahmen 2 ist zunächst ein an seiner Unterseite offenes Gehäuse 3 mit zu öffnenden Abdeckungen 4 verbunden, in dem gegebenenfalls ein mit Durchbrechungen versehener Abbeerzylinder (nicht dargestellt) angeordnet ist, der drehbar gelagert und antreibbar sein kann.

Dem Gehäuse 3 ist ein Einfülltrichter 6 vorgeordnet und ein Austrittsgehäuse 7 für die Traubenrappen, das eine Abdeckung 8 aufweist und ebenfalls auf der Unterseite offen ist und über einer Rutsche platziert wird.

Eine mit Stacheln 13 versehene, Einfülltrichter 6, Gehäuse 3 mit Abbeerzylinder 4 und Austrittsgehäuse 7 in der durchragenden Abbeerwalze 14 ist drehbar gelagert und über einen Drehantrieb 15 mit Motor 15.1 und Getriebe 15.2, wie einen Stiftwellenantrieb drehbar. Soweit ein Abbeerzlyinder ebenfalls in Drehungen versetzt wird, sind die Drehrichtung von Abbeerzylinder 5 und Abbeerwalze 14 in der Regel gegensinnig.

An dem Drehantrieb 15 abgewandten Ende ist die Abbeerwalze 14 über elastische und/oder dämpfende Puffer 11, wie Gummipuffer auf dem Grundrahmen 2 gelagert und mittels eines Vibrationsantriebs 12 in Schwingungen versetzbar.

Wie weiter insbesondere aus Fig. la ersichtlich ist, sind der Drehantrieb 15 bzw. genauer seine Abtriebswelle 15.3 und die Antriebswelle 14.1 der Walze 14 nicht starr, sondern elastisch-dämpfend über eine Antriebsverbindung 20 miteinander verbunden. Hierzu weist die Antriebsverbindung 20 elastisch-dämpfende Glieder 21.2 in der Form von zylindrischen Gummipuffern auf, die vorzugsweise in der dargestellten Ausführungsform eine Shore-Härte von ca. 40 haben. Ein Teil der elastisch-dämpfenden Glieder 21.1 ist mit radialer Wirkrichtung, ein anderer Teil 21.2 mit im Wesentlichen tangentialer oder angularer Wirkrichtung angeordnet.

So ist an der Antriebswelle 14.1 der Abbeerwalze 14 drehfest ein dreigliedriger Stern 22 mit axial abgebogenen Laschen 22.1 befestigt. An der Abtriebswelle 15.1 des Drehantriebs 15 ist eine radial gerichtete Scheibe 23 befestigt, die ebenfalls zunächst axial abgebogene Laschen 23.1 aufweist. Zwischen den axial abgebogenen Laschen 22.1 und 23.1 sind die elastisch-dämpfenden Glieder (Gummipuffer) 21.1 mit radialer Wirkrichtung angeordnet.

Weiterhin sind an der Abtriebswelle 14.1 nahezu radial gerichtete Laschen 24 befestigt; die axial abgebogenen Laschen 23.1 der Scheibe 23 setzen sich in einem zunächst angular und anschließend radial nach innen gebogenen Abschnitt 23.2 fort. Zwischen dem Abschnitt 23.2 und den Laschen 24 sind die im Wesentlichen angular oder tangential gerichteten elastisch-dämpfenden Glieder (Gummipuffer) 21.2 befestigt.

Derart kann der Drehantrieb 15 die Abbeerwalze 14 zuverlässig über die beschriebene elastisch-dämpfende Verbindung antreiben, während Vibrationsbewegungen der Abbeerwalze 14 durch die elastisch-dämpfenden Glieder 21.1, 21.2 gegenüber der Abtriebswelle 15.1 und damit dem Drehantrieb 15 entkoppelt und auf diesen nicht übertragen werden.

Die elastisch-dämpfenden Glieder 21.1, 21.2 sowie die elastischen und/oder dämpfenden Puffer 11 des Vibrationsantriebs 12 bzw. -rahmens 9 weisen vorzugsweise die gleiche Shore-Härte oder eine vergleichbare Shore-Härte auf.

Die drehbar gelagerte Abbeerwalze 14 wird über den Vibrationsantrieb 12 in Schwingungen relativ zum Gehäuse 3 in Schwingungen versetzt.

Zum Betrieb der erfindungsgemäßen Abbeermaschine 1 werden die Antriebe eingeschaltet. Über den Einfülltrichter 6 wird Traubengut auf einen Schneckenbereich der Abbeerwalze 14 im Bereich des Einfülltrichters 6 aufgegeben und durch die dort angeordneten schraubenförmigen Schaufeln in den Abbeerzylinder 5 hineinbefördert. In diesem erfolgt in an sich bekannter Weise aufgrund des Zusammenwirkens der an der Abbeerwalze 14 befindlichen Stacheln mit dem gelochten Abbeerzylinder 5 ein Trennen der Traubenbeeren von den Traubenrappen. Die Traubenbeeren werden durch die Löcher des Abbeerzylinders 5 aus diesem herausbefördert und fallen in einen Spalt (nicht dargestellt) zwischen zwei Quetschwalzen (nicht dargestellt) und werden von diesen unter Quetschung nach unten gefördert, wo sie in einen Aufnahmetank oder Bottich fallen (nicht dargestellt). Die Traubenrappen werden durch die schraubengangförmige Anordnung der Abbeerwalze 14 aus dem Abbeerzylinder 5 zum rechten Ende hinausbefördert und werden dort über eine Rutsche entsorgt.

Durch die der Abbeerwalze 14 mittels des Vibrationsantriebs 12 aufgeprägten Bewegung wird eine Auflockerung des Traubengutes erreicht, wodurch ohne Reduzierung des Wirkungsgrades und/oder des Durchsatzes eine Reduzierung der Drehzahl insbesondere der Abbeerwalze 14, aber auch des Abbeerzylinders 5, erreicht werden kann und damit eine schonendere Behandlung des Beerengutes beim Trennen derselben von den Traubenrappen erreicht wird. Dabei wird durch die elastische Verbindung zwischen Drehantrieb 15 und Abbeerwalze 14 ein Einfluss des Vibrationsantriebs auf den Drehantrieb 15 und damit eine Schädigung desselben zuverlässig verhindert.

### Bezugszeichenliste

- 1: Abbeermaschine
- 2: Grundrahmen
- 3: Gehäuse
- 4: Abdeckungen
- 5: Abbeerzylinder
- 6: Einfülltrichter
- 7: Austrittsgehäuse
- 8: Abdeckung
- 11: dämpfende Puffer
- 12: Vibrationsantriebe
- 13: Stacheln
- 14: Abbeerwalze
- 14.1: Antriebswelle
- 15: Drehantrieb
- 15.1: Motor
- 15.2: Getriebe
- 15.3: Abtriebswelle
- 20: Antriebsverbindung (vor 14)
- 21.1, 21.2: elastisch-dämpfende Glieder
- 22: Stern
- 22.1: Laschen
- 23: Scheibe
- 23.1: Laschen
- 23.2: Abschnitt
- 24: Laschen

## Patentansprüche

1. Abbeermaschine mit einer Stacheln (13) aufweisenden, um ihre Achse in einem Abbeerzylinder (5) drehbaren Abbeerwalze (14), **dadurch gekennzeichnet, dass** wischen Abtriebswelle (15.3) eines die Abbeerwalze (14) antreibenden Drehantriebs (15) und Abtriebswelle (14.1) der Abbeerwalze (14) eine elastisch-dämpfende Antriebsverbindung (20) vorgesehen ist.

2. Abbeermaschine nach Anspruch 1, **dadurch gekennzeichnet, dass** zwischen Abtriebswelle (15.3) des Drehantriebs (15) und Antriebswelle (14.1) der Abbeerwalze (14) radial und/oder im Wesentlichen tangential gerichtete elastisch-dämpfende Glieder (21.1, 21.2) vorgesehen sind.

3. Abbeermaschine nach Anspruch 2, **dadurch gekennzeichnet, dass** die elastisch-dämpfenden Glieder (21.1, 21.2) Gummipuffer sind.

4. Abbeermaschine nach einem der vorangehenden Ansprüche, **gekennzeichnet durch** einen Vibrationsantrieb (12) für die Abbeerwalze (14).

5. Abbeermaschine nach Anspruch 4, **dadurch gekennzeichnet, dass** der Vibrationsantrieb (12) an dem dem Drehantrieb (15) abgewandten Ende der Abbeerwalze (14) angeordnet ist.

6. Abbeermaschine nach Anspruch 4 oder 5, **dadurch gekennzeichnet, dass** der Vibrationsantrieb (12) seine Vibrationsschwingungen über den elastisch-dämpfenden Gliedern (21.1, 21.2), insbesondere Puffern, entsprechende elastisch-dämpfende Glieder überträgt.

7. Abbeermaschine nach einem der Ansprüche 2 bis 5, **dadurch gekennzeichnet, dass** die elastisch-dämpfenden Glieder (21.1, 21.2), insbesondere Gummipuffer, eine Shore-Härte von 30 bis 50, vorzugsweise ca. 40 aufweisen.

8. Abbeermaschine nach einem der Ansprüche 4 bis 7, **gekennzeichnet durch** mindestens einen Vibrationsantrieb (12) zur schwingenden Bewegung der Abbeerwalze (14), insbesondere einem Abbeerzylinder (5).

9. Abbeermaschine nach Anspruch 7 oder 8, **dadurch gekennzeichnet, dass** die Abbeerwalze (14) elastisch und/oder dämpfend gelagert ist.

10. Abbeermaschine nach Anspruch 9, **gekennzeichnet durch** Gummipuffer (11) zur Lagerung der Abbeerwalze (14).

## Claims

1. A stalk separator with a stalk separating roll (14) having spines (13) and being rotatable about its axis in a stalk separating cylinder (5), **characterised in that** an elastic-damping drive connection (20) is provided between the driven shaft (15.3) of a rotary drive (15) driving the stalk separating roll (14) and the drive shaft (14.1) of the stalk separating roll (14).

2. The stalk separator according to Claim 1, **characterised in that** elastic-damping elements (21.1, 21.2), directed radially and/or essentially tangentially, are provided between the driven shaft (15.3) of the rotary drive (15) and the drive shaft (14.1) of the stalk separating roll (14).

3. The stalk separator according to Claim 2, **characterised in that** the elastic-damping elements (21.1, 21.2) are rubber buffers.

4. The stalk separator according to any one of the preceding claims, **characterised by** a vibratory drive (12) for the stalk separating roll (14).

5. The stalk separator according to Claim 4, **characterised in that** the vibratory drive (12) is arranged at the end of the stalk separating roll (14) facing away from the rotary drive (15).

6. The stalk separator according to Claim 4 or 5, **characterised in that** the vibratory drive (12) transmits its vibratory oscillations via the elastic-damping elements (21.1, 21.2), in particular buffers as suitable elastic-damping elements.

7. The stalk separator according to any one of the preceding Claims 2 to 5, **characterised in that** the elastic-damping elements (21.1, 21.2), in particular rubber buffers have a Shore hardness of 30 to 50, preferably approx. 40.

8. The stalk separator according to any one of Claims 4 to 7, **characterised by** at least one vibratory drive (12) for the oscillating movement of the stalk separating roll (14), particularly a stalk separating cylinder (5).

9. The stalk separator according to Claim 7 or 8, **characterised in that** the stalk separating roll (14) is mounted elastically and/or in a damping manner.

10. The stalk separator according to Claim 9, **characterised by** rubber buffers (11) for accommodating the stalk separating roll (14).

## Revendications

1. Égrappoir équipé d'un rouleau d'égrappage (14) comportant des pics (13) et pouvant tourner autour de son axe dans un cylindre d'égrappage (5), **caractérisé en ce qu'**une liaison d'entraînement en entrée (20) à amortissement élastique est prévue entre l'arbre d'entraînement en sortie (15.3) d'un entraînement en entrée tournant (15) entraînant le rouleau d'égrappage (14) et l'arbre d'entraînement en entrée (14.1) du rouleau d'égrappage (14).

2. Égrappoir selon la revendication 1, **caractérisé en ce que** des éléments (21.1, 21.2) à amortissement élastique orientés dans le plan radial et/ou pour l'essentiel tangentiel sont prévus entre l'arbre d'entraînement en sortie (15.3) de l'entraînement en entrée tournant (15) et l'arbre d'entraînement en entrée (14.1) du rouleau d'égrappage (14).

3. Égrappoir selon la revendication 2, **caractérisé en ce que** les éléments (21.1, 21..2) à amortissement élastique sont des tampons en caoutchouc.

4. Égrappoir selon l'une quelconque des revendications précédentes, **caractérisé par** la présence d'un entraînement en entrée vibrationnel (12) pour le rouleau d'égrappage (14).

5. Égrappoir selon la revendication 4, **caractérisé en ce que** l'entraînement en entrée vibrationnel (12) est disposé au niveau de l'extrémité du rouleau d'égrappage (14) opposée à l'entraînement en entrée tournant (15).

6. Égrappoir selon la revendication 4 ou 5, **caractérisé en ce que** l'entraînement en entrée vibrationnel (12) transmet ses oscillations vibrationnelles via les éléments à amortissement élastique correspondant aux éléments (21.1, 21.2) à amortissement élastique, notamment sous la forme de tampons.

7. Égrappoir selon l'une quelconque des revendications 2 à 5, **caractérisé en ce que** les éléments (21.1, 21.2) à amortissement élastique, notamment sous la forme de tampons en caoutchouc, présentent une dureté Shore allant de 30 à 50, de préférence d'environ 40.

8. Égrappoir selon l'une quelconque des revendications 4 à 7, **caractérisé par** la présence d'au moins un entraînement en entrée vibrationnel (12) amenant le rouleau d'égrappage (14), notamment le cylindre d'égrappage (5), à réaliser un mouvement oscillant.

9. Égrappoir selon la revendication 7 ou 8, **caractérisé en ce que** le rouleau d'égrappage (14) est maintenu en place de façon élastique et/ou amortissante.

10. Égrappoir selon la revendication 9, **caractérisé par** la présence de tampons en caoutchouc (11) servant au positionnement du rouleau d'égrappage (14).
